# EUROPEAN PATENT APPLICATION

(11) **EP 2 308 436 A1**
(43) Date of publication of application: **13.04.2011**
(21) Application number: 09172369.2
(22) Date of filing: 06.10.2009
(51) Int. Cl.: A61G 5/00, B60K 7/00, B62M 6/40

(54) **Power output device for wheeled vehicle**

(71) Applicant: Huang, Lin Hsiang, Tapei 22041 (Province of China) (TW); Lin, Chia Liang, Tapei 22041 (Province of China) (TW); Lin, Tung Ching, Tapei 22041 (Province of China) (TW)
(72) Inventor: Huang, Lin Hsiang, Tapei 22041 (Province of China) (TW); Lin, Chia Liang, Tapei 22041 (Province of China) (TW); Lin, Tung Ching, Tapei 22041 (Province of China) (TW)
(74) Representative: Beck & Rössig European Patent Attorneys

(57) **Abstract**

A power output device (1) for attaching to a wheel (8) having a hub (81) and a cover (83, 84), the power output device (1) includes a housing (10) disposed in the hub (81), a motor (32) disposed in the housing (10) and having a magnet (37) and a coil (38) for driving a spindle (33), a reduction gearing (4) attached to the motor (32) and having three gears (42), a pinion (36) attached to the spindle (33) and engaged with the gears (42), a gear wheel (45) secured to the cover (83, 84) of the wheel (8) and rotatably attached onto the reduction gearing (4) and engaged with the gears (42) for allowing the gear wheel (45) to be rotated relative to the housing (10) and the motor (32) by the gears (42) and the spindle (33).

## Description

The invention relates to a power output device for rotating or driving a wheel of a wheeled vehicle.

Typical power output devices for wheeled vehicle comprise a large battery and a number of parts or elements to be separately attached to the wheeled vehicle such that the typical power output devices may not be easily attached to the wheeled vehicle by the users themselves and should be assembled by specialized persons.

The invention is to provide a power output device for attaching to a wheel of a wheeled vehicle and for selectively rotating or driving the wheel of the wheeled vehicle.
FIGS. 1, 2 are exploded views of a power output device;
FIG. 3 is a cross sectional view of the power output device;
FIGS. 4, 5 are the other partial exploded views;
FIGS. 6, 7 are perspective views, in which one half of the power output device has been cut off for showing the inner structure of the power output device; and
FIGS. 8, 9 are plan views of the power output device.

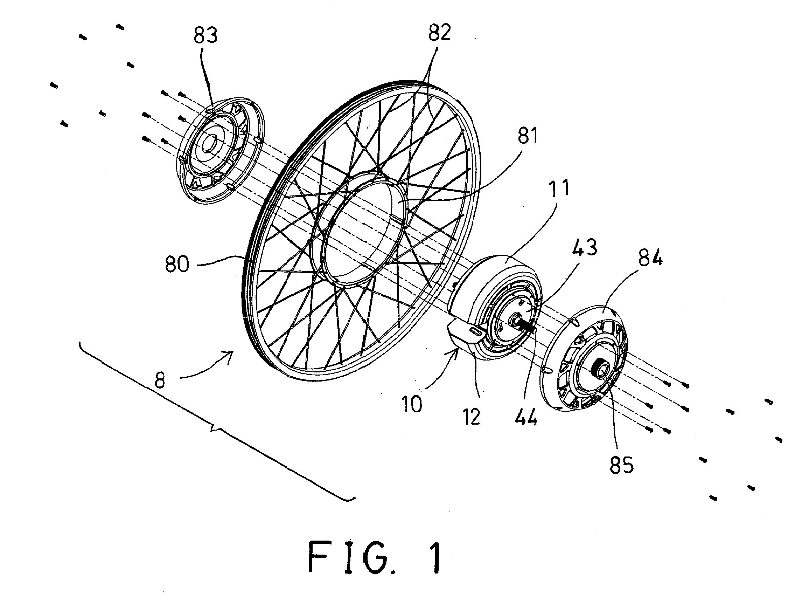

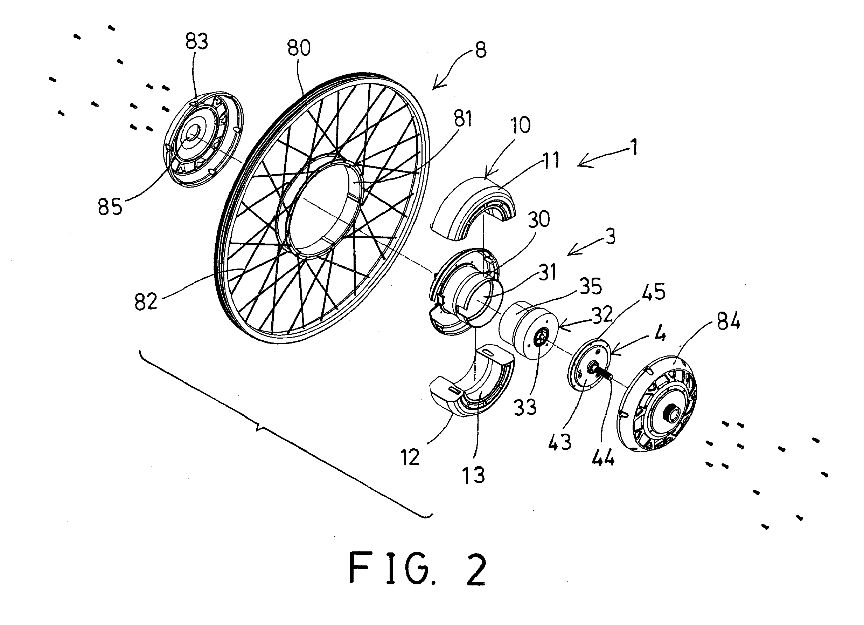

Referring to FIGS. 1-3, a power output device 1 is provided for attaching to a wheel 8 of a wheeled vehicle, such as unicycle, bicycle, tricycle, motorcycle or other wheeled vehicles, which includes a wheel hub 81 disposed in a wheel rim 80 and coupled to the rim 80 with spokes 82, one or more (such as two) covers 83, 84 may be attached to the sides of the hub 81 for enclosing the hub 81, and each include an opening 85.

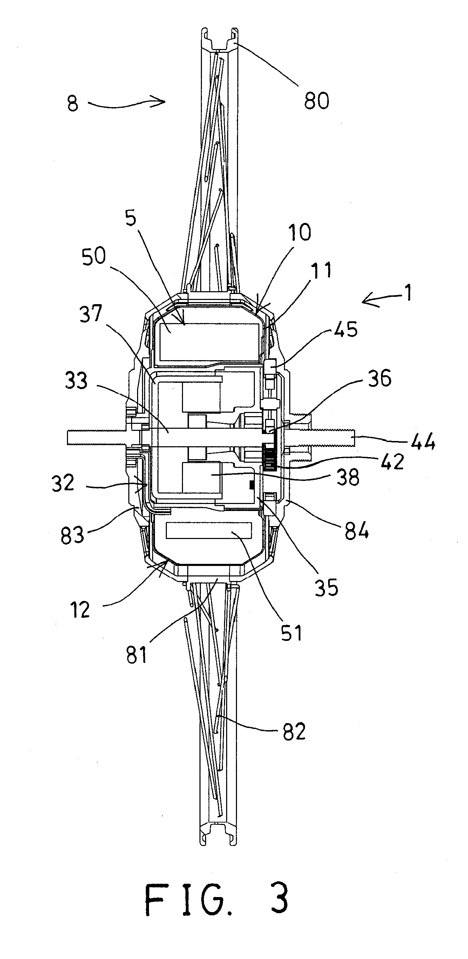

The power output device 1 includes a housing 10 disposed in the hub 81 and having such as two housing members 11, 12 secured together, and having a chamber 13 for receiving a motor assembly 3 which includes a container 30 disposed in the chamber 13 of the housing 10 and having a compartment 31 for receiving a motor 32, the motor 32 may be selected from different powers, such as 200W, 400W, 600W, or the like and includes a spindle 33 disposed in an inner space 34 of a motor casing 35 (FIGS. 3, 6, 7) and two pinions 36 secured to the ends of the spindle 33.

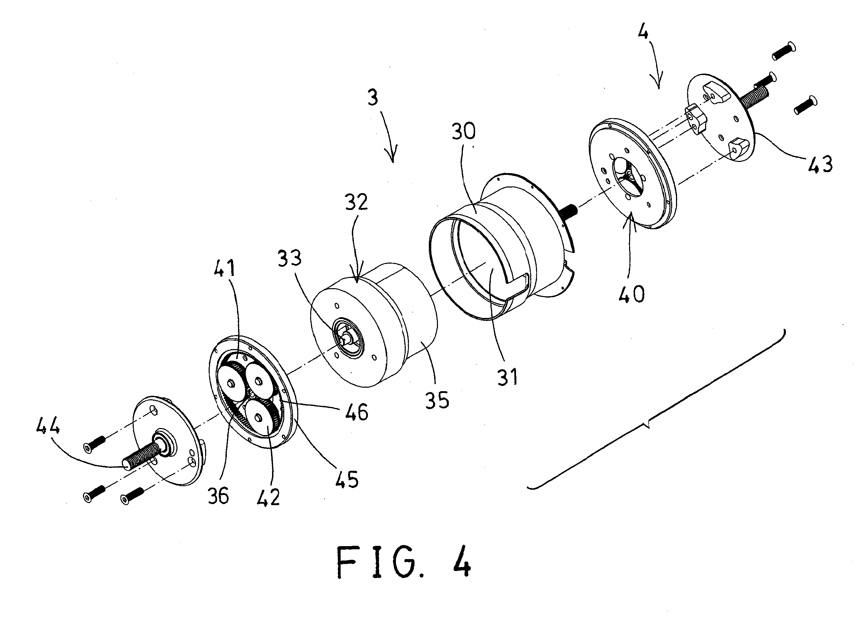

The motor 32 includes a magnet 37 disposed in the space 34 of the casing 35 and a coil 38 disposed between the spindle 33 and the magnet 37 for generating an electromagnetic force to rotate the spindle 33 relative to the casing 35 of the motor 32. One or more (such as two) reduction gearings 4 each include a receptacle 40 attached to the container 30 or the casing 35 of the motor 32, and having a chamber 41 (FIG. 4) for receiving two or more (such as three) gears 42, the pinions 36 are engaged into the chamber 41 of the receptacle 40 and engaged with the gears 42 for rotating the gears 42 relative to the receptacle 40. The receptacles 40 each include a cap 43 attached to the side, and a bolt or shank 44 extended from the cap 43 and engaged through the opening 85 of the covers 83, 84 for mounting the receptacle 40 and the container 30 and the casing 35 of the motor assembly 3 and the housing 10 to the fork devices of the vehicles.

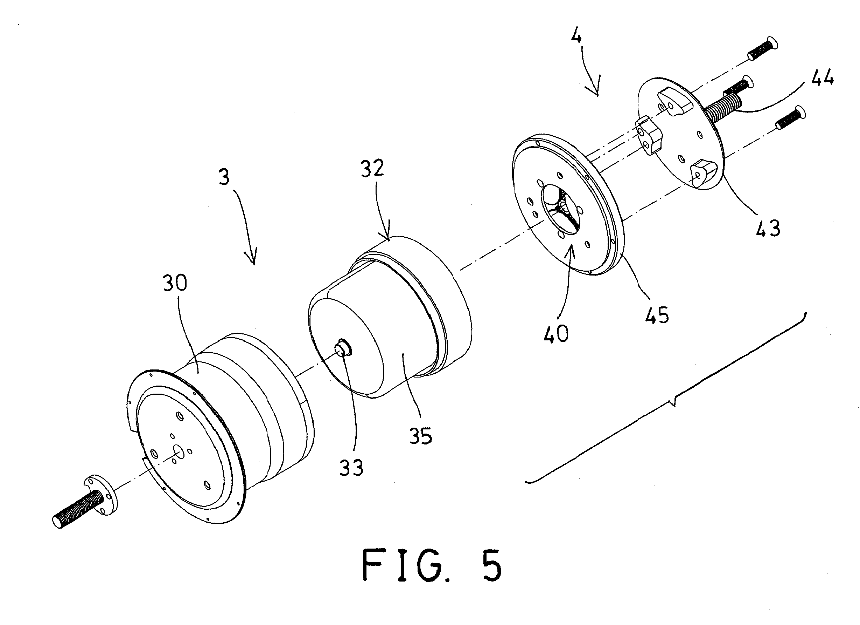

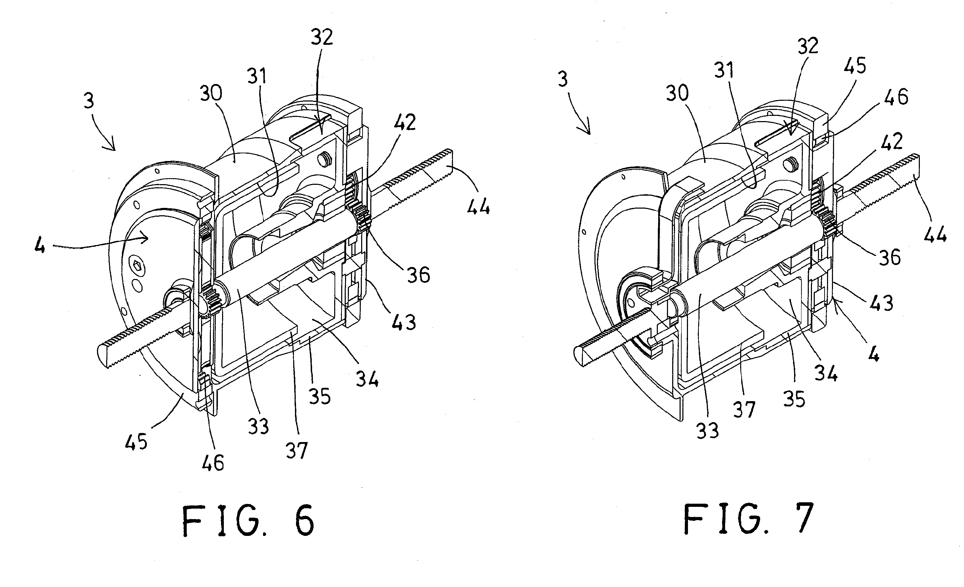

A gear wheel 45 is rotatably mounted onto each receptacle 40 and engaged with the gears 42 for allowing the gear wheel 45 to be rotated relative to the receptacle 40 by the gears 42 and the pinions 36 of the spindle 33. The gear wheel 45 is secured to the covers 83, 84 of the hub 81 of the wheel 8 for allowing the wheel 8 to be rotated or driven relative to the shank 44 and the receptacle 40 by the spindle 33 of the motor 32. As shown in FIGS. 5 and 7, the motor assembly 3 may include only one reduction gearing 4, the rotational speed of the spindle 33 and the pinions 36 relative to the gears 42 and the gear wheel 45 is about 7:1, and preferably 4:1.

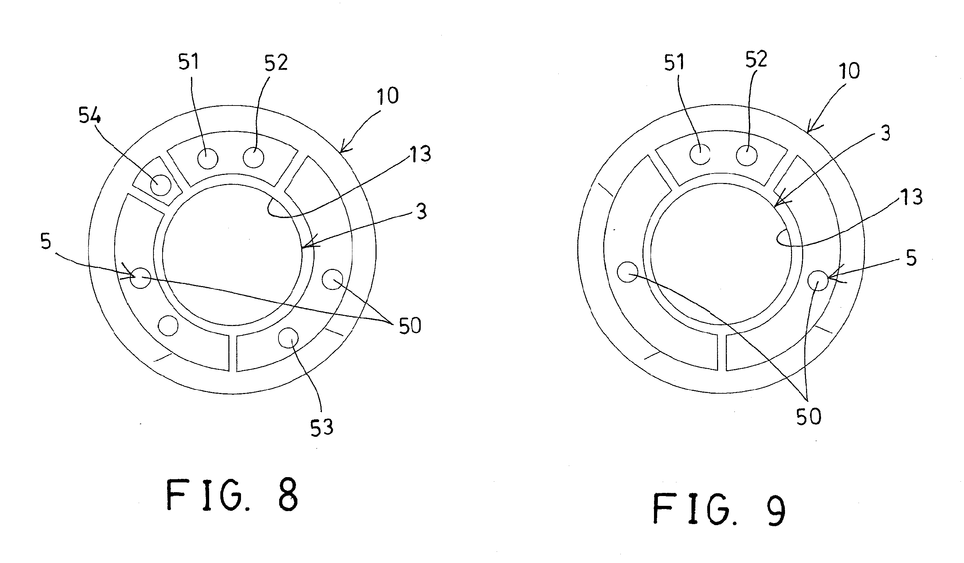

As shown in FIG. 8, a control device 5 includes one or more rechargeable batteries 50 attached to the housing 10, a processor device 51 attached to the housing 10 and coupled to the batteries 50, a torque detector 52 coupled to the processor device 51 for detecting the torque of the spindle 33 of the motor 32 and for controlling the processor device 51 to apply the suitable electromagnetic force to rotate the spindle 33 relative to the casing 35 of the motor 32, a signal receiver 53 coupled to the processor device 51 for receiving the control signals from the users, and one or more sensors 54, 55, such as photoelectric tubes or carbon dioxide sensors 54, or thermometers 55 coupled to the processor device 51. Another control device may be attached to the vehicle and coupled to the processor device 51 or the signal receiver 53 with cables or wirelessly for controlling the processor device 51 to actuate or operate the spindle 33 of the motor 32.

In operation, the processor device 51 may actuate the motor 32 to rotate the spindle 33 and the wheel 8. When climbing up the hill, the torque detector 52 may actuate the processor device 51 to operate the motor 32 to apply a stronger electromagnetic force to rotate the spindle 33. On the contrary, while moving down the hill, the torque detector 52 may actuate the processor device 51 to operate the motor 32 to supply smaller electromagnetic force.

## Claims

1. A power output device for attaching to a wheel (8) having a hub (81), wherein:
a cover (83, 84) is attached to the hub (81) and includes an opening (85),
the power output device (1) comprises a housing (10) disposed in the hub (81),
a motor (32) is disposed in the housing (10) and includes a magnet (37) and a coil (38) for driving a spindle (33),
a reduction gearing (4) is attached to the motor (32) and includes a shank (44) engaged through the opening (85) of the cover (83, 84) and includes three gears (42),
a pinion (36) is attached to the spindle (33) and engaged with the gears (42),
a gear wheel (45) is secured to the cover (83, 84) of the wheel (8) and rotatably attached onto the reduction gearing (4) and engaged with the gears (42) for allowing the gear wheel (45) to be rotated relative to the housing (10) and the motor (32) by the gears (42) and the spindle (33).

2. A power output device as claimed in claim 1, wherein the reduction gearing (4) includes a receptacle (40) having a chamber (41) for receiving the gears (42) and the pinion (36) of the spindle (33).

3. A power output device as claimed in claim 2, wherein the receptacle (40) includes a cap (43) having the shank (44) extended from the cap (43).

4. A power output device as claimed in one of claims 1 to 3, wherein the housing (10) includes a chamber (13) for receiving the motor (32).

5. A power output device as claimed in claim 4, wherein the housing (10) includes a container (30) engaged in the chamber (13) of the housing (10) and having a compartment (31) for receiving the motor (32).

6. A power output device as claimed in one of claims 1 to 5, wherein a control device (5) is attached to the housing (10) and includes a processor device (51).

7. A power output device as claimed in claim 6, wherein the control device (5) includes a battery (50) coupled to the processor device (51).

8. A power output device as claimed in claim 6 or 7, wherein the control device (5) includes a torque detector (52) coupled to the processor device (51) for detecting the torque of the spindle (33) of the motor (32) and for controlling the processor device (51) to apply the suitable electromagnetic force to rotate the spindle (33) relative to the casing (35) of the motor (32).

9. A power output device as claimed in one of claims 6 to 8, wherein the control device (5) includes a signal receiver (53) coupled to the processor device (51) for receiving the control signals from the users.

10. A power output device as claimed in one of claims 6 to 9, wherein the control device (5) includes a sensor (54, 55) coupled to the processor device (51).
